# EUROPÄISCHE PATENTSCHRIFT

(11) **EP 4 042 246 B1**
(45) Veröffentlichungstag und Bekanntmachung des Hinweises auf die Patenterteilung: **07.08.2024**
(21) Anmeldenummer: 20799981.4
(22) Anmeldetag: 07.10.2020
(51) Int. Cl.: G05B 19/00, G05B 19/418, G05B 23/02

(54) **VORRICHTUNG SOWIE VERFAHREN ZUM KONNEKTIEREN UND ZUM ÜBERWACHEN VON PROZESSEN EINER PRODUKTIONSMASCHINE**
APPARATUS AND METHOD FOR CONNECTING AND MONITORING PROCESSES OF A PRODUCTION MACHINE
SYSTÈME ET PROCÉDÉ DESTINÉ À LA CONNEXION ET À LA SURVEILLANCE DE PROCESSUS D'UNE MACHINE DE PRODUCTION

(30) Priorität: 10.10.2019 DE 102019127291
(43) Veröffentlichungstag der Anmeldung: 17.08.2022
(73) Patentinhaber: Schaeffler Technologies AG & Co. KG, 91074 Herzogenaurach (DE)
(72) Erfinder: PSCHYKLENK, Michael, 91740 Röckingen (DE); STROEBEL, Martin, 91459 Markt Erlbach (DE); SCHMIDT-KORTH, Martin, 90409 Nürnberg (DE)
(86) Internationale Anmeldenummer: PCT/DE2020/100872
(87) Internationale Veröffentlichungsnummer: WO 2021/069030

(56) Entgegenhaltungen:
- WO-A1-2018/004590
- WO-A1-2018/210876
- US-A1- 2011 054 637
- US-B1- 6 463 339

## Beschreibung

### Gebiet der Erfindung

Die vorliegende Erfindung betrifft eine Vorrichtung sowie ein Verfahren zum Konnektieren und zum Überwachen, Steuern und Regeln von Prozessen einer Produktionsmaschine und Bearbeitungsprozessen im Produktionsumfeld.

### Stand der Technik

Um bei Produktionsmaschinen ein Mindestmaß an Daten für grundlegende Prozessüberwachungsanwendungen zu erhalten, müssen die Produktionsmaschinen mit verschiedenen Systemen, Modulen eines Remote-I/O-Systems, Industrial Internet of Things, IIoT,-Geräten, Configuration Management System, CMS, oder dergleichen ausgestattet werden, was mit einer Verteuerung der gesamten Produktionsmaschine einhergeht.

Dabei ist beim Zusammenspielen der verschiedenen Systeme die Leistung, die Handhabung und die Konnektivität begrenzt.

Zudem sind diese Systeme oft nicht modular erweiterbar und ermöglichen keine oder nur beschränkte Möglichkeiten zur nachträglichen Erweiterung der Funktionen, wenn etwa zusätzliche Applikationen gewünscht sind.

Besonders dann, wenn die Applikation eine Erweiterung oder einen Austausch oder ein Neu-Design der Hardware-Komponenten erfordern würde, ist ein Upgrade meist nicht wirtschaftlich.

Ist eine Erweiterung möglich, dann oft nur mit den Einschränkungen der aktuell eingebauten Hardware und in der Regel begrenzt auf die jeweilige Bearbeitungstechnologie. Individuelle Anwendungen in Echtzeit können meist nur mit hohem Aufwand auf speziellen dafür geeigneten High-End Messsystemen realisiert werden.

Diverse Hersteller sind mit einer Vielfalt von IIoT-Geräten mit unterschiedlichen Funktionalitäten auf dem Markt vertreten. Hier ist oft vor allem die reine Konnektivität im Fokus. Systeme, die individuelle dezentrale Datenverarbeitung am Rande des Netzwerks betreiben können, also über Edge-Computing Funktionalitäten verfügen, beschränken sich entweder auf die reine Auswertung von Maschinendaten oder verfügen nur über stark eingeschränkte Möglichkeiten, die den Ansprüchen der hoch automatisierten und anspruchsvollen Produktionsprozesse nicht genügen.

Auch die Notwendigkeit der Reaktion in Echtzeit auf stattfindenden Bearbeitungsprozessen nimmt stetig zu. Adaptive Regelungsstrategien zur Taktzeitoptimierung, Erhöhung der Standzeit von Werkzeugen oder zur Vermeidung von sich auf die Qualität der Werkstücke auswirkenden Phänomene wie Rattern, Schleifbrand oder die Bildung von Umfangswelligkeiten sind nur einige Beispiele für notwendige Reaktionen, die in Echtzeit ausgeführt werden müssen. Mit anderen Worten ausgedrückt, für Szenarien, die eine Reaktion in Echtzeit erfordern

Auf dem Markt befindliche Prozessüberwachungssysteme bieten in der Regel geschlossene Einzelfunktionalitäten ohne die Zugriffsmöglichkeit auf relevante nicht fertig prozessierte Daten oder Rohdaten.

Somit können wesentliche Informationen verloren gehen und vorhandene Daten nicht gänzlich zur Informationsbeschaffung herangezogen werden.

Daneben bieten IIoT-Geräte die Möglichkeit Maschinen zu konnektieren und deren Daten abzugreifen oder Daten von übergeordneten Instanzen an die Maschinen zu übertragen.

Systeme zur Prozessüberwachung akquirieren Sensordaten und Prozessdaten der Produktionsmaschine sowie Daten aus anderen Quellen. Diese werden vorverarbeitet, analysiert und die Ergebnisse zur Optimierung und/oder Absicherung von Produktionsprozessen verwendet.

Der Fokus liegt auf der Prozessregelung, -steuerung und -visualisierung. Besonders die Regelung oder Steuerung von Produktionsmaschine oder ganzen Produktionsanlagen erfordert die Verwendung von hoch performanten Hardware-Komponenten, die die Echtzeitkriterien auch während komplexen Berechnungen einhalten können.

Systeme zur Konnektierung akquirieren Konnektierungsdaten aus Steuerungskomponenten einer Produktionsmaschine oder ganzen Produktionsanlagen und leiten diese an ein übergeordnetes System, wie ein Cloud- oder Servereinrichtungen, weiter und umgekehrt. Viele Systeme zur Konnektierung verfügen über Edge-Computing Fähigkeiten, also die Fähigkeit am Rande des Netzwerkes dezentrale Datenverarbeitungsaufgaben zu lösen, und können die Konnektierungsdaten vor Weitergabe aufbereiten.

### Offenbarung der Erfindung

Neben der klassischen Konnektierung von Produktionsmaschinen oder ganzen Produktionsanlagen und dem damit ermöglichten Zugriff auf Zustandsdaten und Parameter derselben, ist es aufgrund der stetig wachsenden Ansprüche von modernen Fertigungsprozessen zwingend notwendig diese Zustandsdaten und Parameter auch mit externen Sensordaten oder Prozessdaten diverser Sensoren zur Erfassung hochdynamischer Signale wie Kräfte, Beschleunigungen, akustischer Signale, Temperaturen, Drücke oder dergleichen in Verbindung zu setzten und zusammen zu verarbeiten sowie zu korrelieren.

Somit können die wesentlichen Kenngrößen zur Ermittlung von Anomalien in Prozessen, zur Führung von Regelstrategien, zur Erfassung von Qualitätsmerkmalen der Werkstücke oder zur Ermittlung von Verschleißzuständen von Komponenten und Werkzeugen bestimmt werden.

Durch das Zusammenfügen von nicht fertig prozessierten Daten in ein zentrales System zur Datenauswertung, ist eine Erhöhung der Datenqualität und Steigerung des Informationsgehaltes von Daten erreichbar. Somit können keine wesentlichen Informationen verloren gehen und vorhandene Daten gänzlich zur Informationsbeschaffung herangezogen werden.

Für die Verarbeitung und Korrelation von Daten können neben den Maschinendaten, hoch dynamische Sensordaten und zentral von einer Cloud/Servereinrichtungen zur Verfügung gestellte Daten parallel zur Ermittlung von komplexen Zusammenhängen, Kenngrößen, Trends oder dergleichen herangezogen werden.

Dies ist bei bisherigen Systemen nur sehr eingeschränkt möglich, da die zur Verfügung stehenden Daten meist nur sequentiell verarbeitet werden und die zur Verfügung stehenden Daten reduziert sind auf die Ergebnisse der Einzelsysteme.

Eine Aufgabe der vorliegenden Erfindung liegt darin, eine Vorrichtung sowie ein Verfahren zum Konnektieren und zum Überwachen von Prozessen einer Produktionsmaschine bereitzustellen, welche die mit dem Stand der Technik einhergehenden Nachteile minimiert oder beseitigt.

Diese Aufgabe wird durch die im Patentanspruch 1 beschriebene Vorrichtung sowie durch das im Patentanspruch 4 angegebene Verfahren gelöst.

Bevorzugte oder optionale Merkmale der Erfindung sind in den abhängigen Patentansprüchen 2 bis 3 bzw. 5 bis 6 angegeben.

Gemäß einem ersten Aspekt der Erfindung wird eine Vorrichtung zum Konnektieren und zum Überwachen von Prozessen einer Produktionsmaschine bereitgestellt, wobei die Vorrichtung umfasst: eine Prozessüberwachungseinrichtung, welche dazu ausgebildet ist, Sensordaten der Produktionsmaschine und Prozessdaten der Produktionsmaschine zu erfassen.

Ferner umfasst die Vorrichtung eine Konnektierungseinrichtung, welche dazu ausgebildet ist, Steuerungsdaten der Produktionsmaschine zu erfassen.

Die Vorrichtung ist dazu ausgebildet, basierend auf den Sensordaten, den Prozessdaten und den Konnektierungsdaten eine Hardwarefunktion der Vorrichtung zu ändern.

Mit anderen Worten, das System umfasst eine CPU, einen rekonfigurierbaren Hardware-Teil (FPGA), modulare und universelle Sensorschnittstelle, einen modularen Feldbus-Konnektor und Ethernet-Schnittstellen zur Cloud/Server und Maschinenanbindung.

Auf der CPU wird das zum Betrieb notwendige Betriebssystem ausgeführt, eine geeignete Softwarebasierte Konnektierungslösung zur Datenkommunikation, die wahlweise über Ethernet und/oder über einen modularen Feldbus-Konnektor mit einer Anlage/ CNC-Bearbeitungsmaschine, über Ethernet mit einem übergeordneten System (Server/Cloud) und mit ebenfalls auf der CPU ausgeführten Software-Applikationen bereit stellt.

Die Software-Applikationen Ihrerseits können über den Feldbus-Konnektor auch auf NC Daten im IPU Takt zugreifen.

Der FPGA bildet das Herzstück des Systems. Auf diesem werden alle zeitkritischen, rechenintensiven und echtzeitrelevanten Funktionen ausgeführt. Diese Technologie ermöglicht es, echte Hardware Komponenten zur Laufzeit zu erzeugen und so, je nach Bedarf auch echte parallele Funktionen auszuführen. Das Einlesen hochdynamischer paralleler Sensorsignale und deren Vorverarbeitung, beispielsweise Filterung, wird ebenfalls im FPGA realisiert.

Somit können mehrere Applikationen gleichzeitig ausgeführt werden, ohne die harten Echtzeit-Anforderungen zu verletzen. Gleichzeitig werden digitale Ein- und Ausgangssignale vom FPGA verwaltet.

Die Vernetzung von mehreren Systemen (in einer Anlage) oder von mehreren lokalen Anlagen in beispielsweise einer Linie ist möglich.

Vorzugsweise ist die Prozessüberwachungseinrichtung dazu ausgebildet eine Datenaufbereitung für die Sensordaten der Produktionsmaschine und für die Prozessdaten der Produktionsmaschine durchzuführen; und/oder die Konnektierungseinrichtung dazu ausgebildet für die Konnektierungsdaten eine Konnektierungsdatenaufbereitung durchzuführen.

Weiterhin bevorzugt ist es, wenn die Vorrichtung zum Konnektieren und zum Überwachen von Prozessen einer Produktionsmaschine eine feldprogrammierbare Logikgatter-Anordnungseinrichtung aufweist, welche dazu ausgebildet ist eine Hardwarefunktion der Vorrichtung zu ändern.

Gemäß einer bevorzugten Ausführungsform der Erfindung ist die Servereinrichtung dazu ausgebildet, neben den empfangenen Sensordaten, den Prozessdaten und den Konnektierungsdaten ferner auch Clouddaten und Serverdaten zu verarbeiten, um die Hardwarefunktion der Vorrichtung zu ändern.

Vorzugsweise ist die Servereinrichtung dazu ausgebildet, die Hardwarefunktion der Vorrichtung per Trigger zu ändern. Der Trigger bzw. das Triggersignal kann hier von einem zentralen Cloud System übersendet werden.

Vorzugsweise ist eine Servereinrichtung nicht Bestandteil der Vorrichtung an sich, sondern als zentrales externes Serversystem/Cloud ausgebildet.

Gemäß einer bevorzugten Ausführungsform der Erfindung ist die Vorrichtung dazu ausgebildet, eine eigene Hardwarefunktion per Trigger zu ändern.

Gemäß einem zweiten Aspekt der Erfindung wird ein Verfahren zum Konnektieren und zum Überwachen von Prozessen einer Produktionsmaschine bereitgestellt, umfassend die Schritte:
- Erfassen von Sensordaten der Produktionsmaschine und Prozessdaten der Produktionsmaschine mittels einer Prozessüberwachungseinrichtung;
- Erfassen von Steuerungsdaten der Produktionsmaschine mittels einer Konnektierungseinrichtung;
- Verarbeiten der erfassten Sensordaten, Prozessdaten und Konnektierungsdaten mittels einer Vorrichtung; und
- Ändern einer Hardwarefunktion der Vorrichtung basierend auf den Sensordaten, den Prozessdaten und den Konnektierungsdaten.

Vorzugsweise umfasst das Verfahren ferner den folgenden Schritt: Durchführen einer Datenaufbereitung der Sensordaten der Produktionsmaschine und der Prozessdaten der Produktionsmaschine der Prozessüberwachungseinrichtung; und/oder durchführen einer Datenaufbereitung der Konnektierungsdaten der Konnektierungseinrichtung.

Gemäß einer weiteren Ausführungsform der vorliegenden Erfindung ist vorgesehen, dass das Verfahren ferner folgenden Schritt umfasst: Ändern einer Hardwarefunktion der Vorrichtung mittels einer feldprogrammierbaren Logikgatter-Anordnungseinrichtung basierend auf den Sensordaten, den Prozessdaten und den Konnektierungsdaten.

Gemäß einer bevorzugten Ausführungsform der Erfindung umfasst das Verfahren ferner die Schritte:
- Empfangen von Clouddaten und Serverdaten
- Ändern einer Hardwarefunktion der Vorrichtung mittels einer Servereinrichtung basierend auf den Clouddaten und Serverdaten, welche von einer Cloud/Servereinrichtungen bereitgestellt werden.

Gemäß einer bevorzugten Ausführungsform der Erfindung umfasst das Verfahren ferner den Schritt Triggern einer Änderung der Hardwarefunktion der Vorrichtung durch eine Servereinrichtung.

Ein verbessertes Verständnis der Erfindung und deren Vorteile wird durch die schematische Darstellung der Zeichnungen erreicht, die nicht limitierend wirken und nur eine mögliche bevorzugte Ausführungsform beschreiben.
Fig.1 eine Vorrichtung zum Konnektieren und zum Überwachen von Prozessen einer Produktionsmaschine gemäß einem Ausführungsbeispiel der Erfindung;
Fig.2 ein Flussdiagramm zur Illustration von Schritten eines Verfahrens zum Konnektieren und zum Überwachen von Prozessen einer Produktionsmaschine gemäß einem Ausführungsbeispiel der Erfindung; und
Fig.3 ein Prozessdiagramm zur Illustration von Schritten eines Verfahrens zum Konnektieren und zum Überwachen von Prozessen einer Produktionsmaschine gemäß einem Ausführungsbeispiel der Erfindung.

Die Figuren sind lediglich schematisch und nicht maßstabsgetreu. In den Figuren sind gleiche, gleich wirkende oder ähnliche Elemente mit gleichen Bezugszeichen versehen.

### Ausführungsformen der Erfindung

Zunächst wird die Vorrichtung gemäß einer bevorzugten Ausführungsform der Erfindung beschrieben, und sodann die vorteilhaften Wirkungen der Erfindung beschrieben.

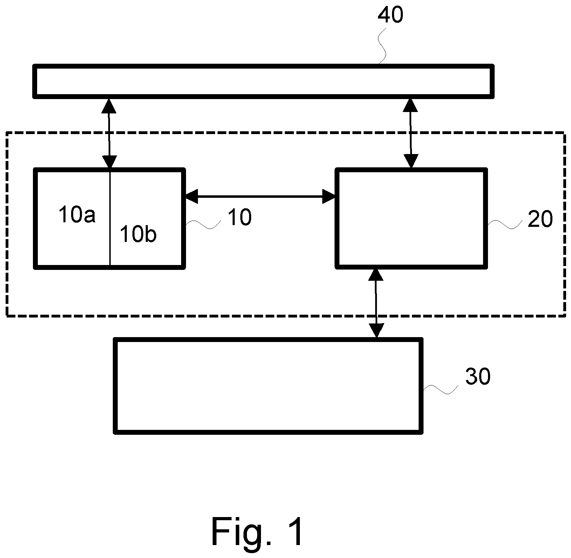

Die Fig.1 zeigt eine schematische Darstellung der Vorrichtung zum Konnektieren und zum Überwachen von Prozessen einer Produktionsmaschine gemäß einem Ausführungsbeispiel der Erfindung.

Die Prozessüberwachungseinrichtung 10 verfügt über modulare und/oder universelle Sensorschnittstellen zur Erfassung hochdynamischer Signale wie z.B. Kräfte, Beschleunigungen, akustischer Signale, Temperaturen und/oder Drücke der Produktionsmaschine 40 und über eine Ethernetschnittstelle und/oder über einen modularen Feldbus-Konnektor zur Datenkommunikation mit der Servereinrichtung 30.

Die Konnektierungseinrichtung 20 verfügt wahlweise über eine Ethernetschnittstelle und/oder über einen modularen Feldbus-Konnektor zur Datenkommunikation mit der Servereinrichtung 30 oder der Produktionsmaschine 40.

Die Servereinrichtung 30 verfügt wahlweise über eine Ethernetschnittstelle und/oder über einen modularen Feldbus-Konnektor zur Datenkommunikation mit der der Konnektierungseinrichtung 20.

In der Servereinrichtung 30 werden nicht fertig prozessierte Daten verschiedener Quellen, welche vorzugsweise Sensordaten der Produktionsmaschine, Prozessdaten der Produktionsmaschine der Prozessüberwachungseinrichtung, Steuerungsdaten sowie Konnektierungsdaten der Konnektierungseinrichtung 20 der Produktionsmaschine, Cloud/serverdaten von weiteren Cloud/Servereinrichtungen sind, zusammengeführt und korreliert.

Durch das Zusammenfügen von nicht fertig prozessierten Daten in ein zentrales System, wie die Servereinrichtung 30, zur Datenauswertung, ist eine Erhöhung der Datenqualität und eine Steigerung des Informationsgehaltes von Daten erreichbar.

Für die Auswertung und Korrelation von Daten können neben den Maschinendaten, hoch dynamische Sensordaten und zentral von einer Cloud/Servereinrichtungen zur Verfügung gestellte Daten parallel zur Ermittlung von komplexen Zusammenhängen, Kenngrößen, Trends und dergleichen herangezogen werden. Somit können keine wesentlichen Informationen verloren gehen und vorhandene Daten gänzlich zur Informationsbeschaffung herangezogen werden.

Durch die gewonnenen Zusammenhänge kann die Servereinrichtung 30 eine Hardwarefunktion der Vorrichtung ändern, vorzugsweise weist die Vorrichtung eine feldprogrammierbare Logikgatter-Anordnungseinrichtung auf, welche dazu ausgebildet ist eine Hardwarefunktion der Vorrichtung zu ändern, wobei die Servereinrichtung 30 die Änderung der Hardware triggert.

Eine feldprogrammierbaren Logikgatter-Anordnungseinrichtung, welche in der Prozessüberwachungseinrichtung 10 eingebettet ist, stellt eine Hauptkomponente der Vorrichtung dar. Mit dieser feldprogrammierbaren Logikgatter-Anordnungseinrichtung werden alle zeitkritischen, rechenintensiven und echtzeitrelevanten Funktionen ausgeführt. Durch die feldprogrammierbare Logikgatter-Anordnungseinrichtung kann auf Ereignisse während des Bearbeitungsprozesseses zeitsynchron reagiert werden, wobei die anspruchsvollen Echtzeitanforderungen eingehalten werden.

Adaptive Regelungsstrategien zur Taktzeitoptimierung, Erhöhung der Standzeit von Werkzeugen oder zur Vermeidung von sich auf die Qualität der Werkstücke auswirkenden Phänomene wie Rattern, Schleifbrand oder die Bildung von Umfangswelligkeiten sind nur einige Beispiele für notwendige Reaktionen, die in Echtzeit ausgeführt werden müssen.

Das parallele Einlesen und Visualisieren hochdynamischer Sensorsignale und deren Datenaufbereitung, wie z.B. Vorfilterung, wird ebenfalls in der feldprogrammierbaren Logikgatter-Anordnungseinrichtung realisiert. Somit können mehrere Applikationen gleichzeitig ausgeführt werden, ohne die harten Echtzeitanforderungen zu verletzten. Gleichzeitig werden digitale Ein- und Ausgangssignale von der feldprogrammierbaren Logikgatter-Anordnungseinrichtung verwaltet.

Die Visualisierung erfolgt nicht im FPGA, sondern Wahlweise auf dem lokalen WebServer oder zentralen WebServern.

Die Vorrichtung ist modular erweiterbar mittels der zur Verfügung stehenden Ethernetschnittstelle und/oder des zur Verfügung stehenden modularen Feldbus-Konnektors, welche zur Datenkommunikation mit anderen Vorrichtungen zum Konnektieren und zum Überwachen von Prozessen einer Produktionsmaschine konzipiert sind.

Durch die eingebettete feldprogrammierbare Logikgatter-Anordnungseinrichtung in der Vorrichtung kann die Vorrichtung leicht und flexibel für andere Applikationen eingesetzt werden ohne Hardware umrüsten zu müssen. Somit ist die Vorrichtung zum Konnektieren und zum Überwachen von Prozessen einer Produktionsmaschine ideal geeignet um im Prototypenbau als auch im Massenmarkt eingesetzt zu werden.

Durch die Integration von einer Prozessüberwachungseinrichtung, einer Konnektierungseinrichtung und einer Servereinrichtung in eine Vorrichtung, ist eine Erhöhung der IT-Sicherheit gegenüber Hackerangriffen von außerhalb des Netzwerkes erreicht, da die integrierten Systeme ideal auf einander abgestimmt werden können und die Kommunikation so zwischen den integrierten Systemen besser geschützt ist.

Zusätzlich wird eine vereinfachte Handhabung für den Benutzer erreicht, da nur noch ein Gerät konfiguriert werden muss.

Mit anderen Worten ausgedrückt, die Vorrichtung zum Konnektieren und zum Überwachen von Prozessen einer Produktionsmaschine ist dazu ausgebildet, eine Kombination eines Prozessüberwachungssystems mit einem Konnektierungssystem bereitzustellen.

Die Vorrichtung zum Konnektieren und zum Überwachen von Prozessen einer Produktionsmaschine ist ferner dazu ausgebildet, eine Nutzung der FPGA Technologie, die eine flexible Veränderung von Hardwarefunktionen ermöglicht bereitzustellen.

Die Vorrichtung zum Konnektieren und zum Überwachen von Prozessen einer Produktionsmaschine ist ferner dazu ausgebildet, eine Einbeziehung von Maschinen, Sensor und Server/Cloud Daten zur lokalen Auswertung derselben auch zu Zwecken der Prozessregelung, -steuerung und - visualisierung zu ermöglichen und dies auch zeitsynchron.

Die Vorrichtung zum Konnektieren und zum Überwachen von Prozessen einer Produktionsmaschine ist ferner dazu ausgebildet, eine flexible und bedarfsgerechte Rekonfiguration von Hardware vorzunehmen, dies kann von einem zentralen System (Server/Cloud) getriggert werden, ferner kann dies ausgehend von in dem zentralen System ermittelten Anforderungen oder manuell getriggert werden.

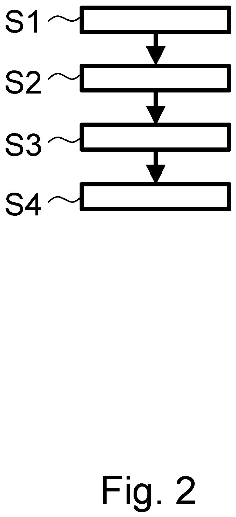

Die Fig.2 zeigt ein Flussdiagramm zur Illustration von Schritten eines Verfahrens zum Konnektieren und zum Überwachen von Prozessen einer Produktionsmaschine gemäß einem Ausführungsbeispiel der Erfindung.

In einem ersten Schritt erfolgt ein Erfassen S1 von Sensordaten der Produktionsmaschine 40 und Prozessdaten der Produktionsmaschine 40 mittels einer Prozessüberwachungseinrichtung 10.

In einem zweiten Schritt erfolgt ein Erfassen S2 von Steuerungsdaten der Produktionsmaschine 40 mittels einer Konnektierungseinrichtung 20.

In einem dritten Schritt erfolgt ein Verarbeiten S3 der erfassten Sensordaten, Prozessdaten und Konnektierungsdaten mittels einer Vorrichtung; und

In einem vierten Schritt erfolgt ein Ändern S4 einer Hardwarefunktion der Vorrichtung basierend auf den Sensordaten, den Prozessdaten und den Konnektierungsdaten.

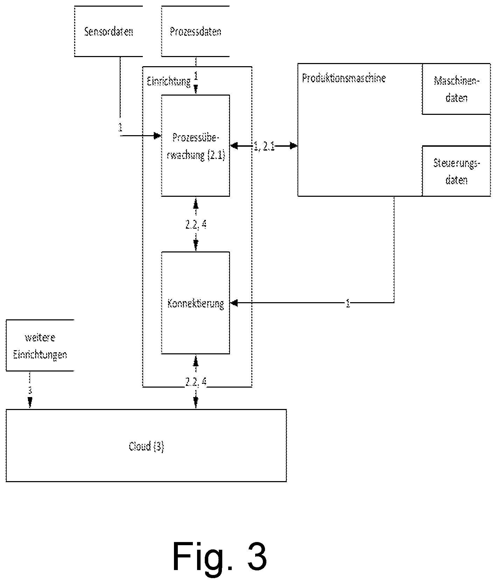

Die Fig.3 zeigt ein Prozessdiagramm zur Illustration von Schritten eines Verfahrens zum Konnektieren und zum Überwachen von Prozessen einer Produktionsmaschine gemäß einem Ausführungsbeispiel der Erfindung.

Die nummerierten Pfeile in dem Beispiel sind aufsteigend chronologisch ausgeführt.
1. Erfassung von allen Maschinendaten (Sensordaten, Prozessdaten, Steuerungsdaten, Maschinendaten).
2.1 Vorfilterung, Analyse von Daten und bei Bedarf Einleitung einer Reaktion zur Maschine hin.
2.2 Übermittlung aller relevanten Informationen über die Konnektierungseinrichtung an die Cloud.
3. Daten von mehreren Einrichtungen werden an die Cloud übermittelt. Dort werden Analysen bzw. Korrelationen mit allen vorhandenen Informationen/Daten gefahren.
4. Bei Bedarf Einleitung der Hardwarefunktionsänderung eines Systems getriggert durch die Cloud.

Die vorliegende Erfindung ist dabei allerdings nicht auf das vorhergehend bevorzugte Ausführungsbeispiel beschränkt, solange sie vom Gegenstand der folgenden Ansprüche umfasst ist.

### Bezugszeichenliste:

- 10: Prozessüberwachungseinrichtung
- 20: Konnektierungseinrichtung
- 30: Servereinrichtung
- 40: Produktionsmaschine
- S1: Erfassen
- S2: Erfassen
- S3: Verarbeiten
- S4: Ändern

## Patentansprüche

1. Vorrichtung zum Konnektieren und zum Überwachen von Prozessen einer Produktionsmaschine (40), wobei die Vorrichtung umfasst:
- eine Prozessüberwachungseinrichtung (10), welche dazu ausgebildet ist, Sensordaten der Produktionsmaschine (40) und Prozessdaten der Produktionsmaschine (40) zu erfassen;
- eine Konnektierungseinrichtung (20), welche dazu ausgebildet ist, Steuerungsdaten der Produktionsmaschine (40) zu erfassen;
- eine Servereinrichtung (30),
wobei
die Vorrichtung dazu ausgebildet ist, in Abhängigkeit von
- den Sensordaten,
- den Prozessdaten,
- von der Konnektierungseinrichtung (20) bereitgestellten Konnektierungsdaten und
- von Cloud- und Serverdaten
eine Hardwarefunktion der Vorrichtung zu ändern, und wobei
die Servereinrichtung (30) dazu ausgebildet ist, die Hardwarefunktion der Vorrichtung per Trigger zu ändern.

2. Vorrichtung nach Anspruch 1,
wobei die Prozessüberwachungseinrichtung (10) dazu ausgebildet ist, für die Sensordaten der Produktionsmaschine (40) und für die Prozessdaten der Produktionsmaschine (40) eine Datenaufbereitung durchzuführen; und/oder
wobei die Konnektierungseinrichtung (20) dazu ausgebildet ist, für die Konnektierungsdaten eine Konnektierungsdatenaufbereitung durchzuführen.

3. Vorrichtung nach Anspruch 1, wobei die Vorrichtung eine feldprogrammierbare Logikgatter-Anordnungseinrichtung aufweist, welche dazu ausgebildet ist, eine Hardwarefunktion der Vorrichtung zu ändern.

4. Verfahren zum Konnektieren und zum Überwachen von Prozessen einer Produktionsmaschine (40), mit den Schritten:
- Erfassen (S1) von Sensordaten der Produktionsmaschine (40) und Prozessdaten der Produktionsmaschine (40) mittels einer Prozessüberwachungseinrichtung (10);
- Erfassen (S2) von Steuerungsdaten der Produktionsmaschine (40) mittels einer Konnektierungseinrichtung (20);
- Empfangen von Clouddaten und Serverdaten
- Verarbeiten (S3) der erfassten Sensordaten, Prozessdaten und Konnektierungsdaten mittels einer Vorrichtung; und
- Ändern (S4) einer Hardwarefunktion der Vorrichtung mittels einer Servereinrichtung (30) in Abhängigkeit von den Sensordaten, den Prozessdaten, von der Konnektierungseinrichtung (20) bereitgestellten Konnektierungsdaten und den Clouddaten und Serverdaten
- Triggern einer Änderung der Hardwarefunktion der Vorrichtung durch eine Servereinrichtung (30).

5. Verfahren nach Anspruch 4, wobei das Verfahren ferner den Schritt umfasst:
- Durchführen einer Datenaufbereitung der Sensordaten der Produktionsmaschine (40) und der Prozessdaten der Produktionsmaschine (40) der Prozessüberwachungseinrichtung (10); und/oder durchführen einer Datenaufbereitung der Konnektierungsdaten der Konnektierungseinrichtung (20).

6. Verfahren nach Anspruch 4, wobei das Verfahren ferner den Schritt umfasst:
- Ändern einer Hardwarefunktion der Vorrichtung mittels einer feldprogrammierbaren Logikgatter-Anordnungseinrichtung basierend auf den Sensordaten, den Prozessdaten und den Konnektierungsdaten.

## Claims

1. An apparatus for connecting and monitoring processes of a production machine (40), wherein the apparatus comprises:
- a process monitoring device (10) which is designed to capture sensor data of the production machine (40) and process data of the production machine (40);
- a connection device (20) which is designed to capture control data of the production machine (40);
- a server device (30),
wherein
the apparatus is designed, according to
- the sensor data,
- the process data,
- connection data provided by the connection device (20) and
- cloud and server data,
to change a hardware function of the apparatus, and wherein
the server device (30) is designed to change the hardware function of the apparatus by means of a trigger.

2. The apparatus according to claim 1,
wherein the process monitoring device (10) is designed to carry out data processing for the sensor data of the production machine (40) and for the process data of the production machine (40); and/or
wherein the connection device (20) is designed to carry out connection data processing for the connection data.

3. The apparatus according to claim 1, wherein the apparatus has a field-programmable logic gate array device which is designed to change a hardware function of the apparatus.

4. A method for connecting and monitoring processes of a production machine (40), having the following steps:
- capturing (S1) sensor data of the production machine (40) and process data of the production machine (40) by means of a process monitoring device (10);
- capturing (S2) control data of the production machine (40) by means of a connection device (20);
- receiving cloud data and server data;
- processing (S3) the captured sensor data, process data and connection data by means of an apparatus; and
- changing (S4) a hardware function of the apparatus by means of a server device (30) according to the sensor data, the process data, connection data provided by the connection device (20) and the cloud data and server data;
- triggering a change in the hardware function of the apparatus by a server device (30).

5. The method according to claim 4, wherein the method further comprises the step of:
- carrying out data processing of the sensor data of the production machine (40) and of the process data of the production machine (40) of the process monitoring device (10); and/or carrying out data processing of the connection data of the connection device (20).

6. The method according to claim 4, wherein the method further comprises the step of:
- changing a hardware function of the apparatus by means of a field-programmable logic gate array device based on the sensor data, the process data and the connection data.

## Revendications

1. Système de connexion et de surveillance de processus d'une machine de production (40), dans lequel le système comprend :
- un dispositif de surveillance de processus (10), lequel est conçu pour collecter des données de capteur de la machine de production (40) et des données de processus de la machine de production (40) ;
- un dispositif de connexion (20), lequel est conçu pour collecter des données de commande de la machine de production (40) ;
- un dispositif serveur (30),
dans lequel
le système est conçu pour modifier, en fonction
- des données de capteur,
- des données de processus,
- des données de connexion fournies par le dispositif de connexion (20) et
- des données en nuage et de serveur
une fonction matérielle du système, et dans lequel
le dispositif serveur (30) est conçu pour modifier la fonction matérielle du système par l'intermédiaire d'un déclencheur.

2. Système selon la revendication 1,
dans lequel le dispositif de surveillance de processus (10) est conçu pour réaliser, pour les données de capteur de la machine de production (40) et pour les données de processus de la machine de production (40), un traitement de données ; et/ou
dans lequel le dispositif de connexion (20) est conçu pour réaliser, pour les données de connexion, un traitement de données de connexion.

3. Système selon la revendication 1, dans lequel le système présente un dispositif de réseau de portes logiques programmable par l'utilisateur conçu pour modifier une fonction matérielle du système.

4. Procédé de connexion et de surveillance des processus d'une machine de production (40), comportant les étapes suivantes :
- la collecte (S1) de données de capteur de la machine de production (40) et de données de processus de la machine de production (40) au moyen d'un dispositif de surveillance de processus (10) ;
- la collecte (S2) de données de commande de la machine de production (40) au moyen d'un dispositif de connexion (20) ;
- la réception de données en nuage et de données de serveur
- le traitement (S3) des données de capteur, des données de processus et des données de connexion collectées au moyen d'un système ; et
- la modification (S4) d'une fonction matérielle du système au moyen d'un dispositif serveur (30) en fonction des données de capteur, des données de processus, des données de connexion fournies par le dispositif de connexion (20) et des données en nuage et des données de serveur
- le déclenchement d'une modification de la fonction matérielle du système par un dispositif serveur (30).

5. Procédé selon la revendication 4, dans lequel le procédé comprend en outre l'étape suivante :
- la réalisation d'un traitement de données des données de capteur de la machine de production (40) et des données de processus de la machine de production (40) du dispositif de surveillance de processus (10) ; et/ou la réalisation d'un traitement de données des données de connexion du dispositif de connexion (20).

6. Procédé selon la revendication 4, dans lequel le procédé comprend en outre l'étape suivante :
- la modification d'une fonction matérielle du système au moyen d'un dispositif de réseau de portes logiques programmable par l'utilisateur en fonction des données de capteur, des données de processus et des données de connexion.
